# FASCICULE DE BREVET EUROPEEN

(11) **EP 0 633 161 B1**
(45) Date de publication et mention de la délivrance du brevet: **10.09.1997**
(21) Numéro de dépôt: 94401467.9
(22) Date de dépôt: 28.06.1994
(51) Int. Cl.: B60N 2/44

(54) **Matelassure de sièges de véhicules automobiles**
Polster für Kraftfahrzeugsitze
Padding for motor vehicle seats

(30) Priorité: 29.06.1993 FR 9307926
(43) Date de publication de la demande: 11.01.1995
(73) Titulaire: BERTRAND FAURE AUTOMOBILE "BFA", F-91882 Massy Cédex (FR)
(72) Inventeur: Vu Khac, Tham, F-91150 Etampes (FR); Sabin, Michel, F-41350 Vineuil (FR); Guerinot, Thierry, F-91150 Etampes (FR)
(74) Mandataire: Bérogin, Francis

(56) Documents cités:
- EP-A- 0 157 105
- EP-A- 0 314 059
- DE-A- 1 430 902
- DE-A- 3 521 068
- FR-A- 2 303 503
- FR-A- 2 599 683
- FR-A- 2 609 703
- GB-A- 2 061 806
- US-A- 4 699 427

## Description

L'invention est relative aux matelassures de sièges, notamment, mais non exclusivement, pour véhicules automobiles, et vise des matelassures pour des coussins, en particulier de dossiers, mais également d'assises, notamment pour des sièges avant de véhicules automobiles.

Ces coussins de sièges sont constitués d'une matelassure, formée en général par un ou des blocs de mousse, élastiquement déformable, et d'un garnissage appelé coiffe, en tissu, cuir, simili ou autre matériau approprié, qui recouvre ce ou ces bloc(s).

Par le document de brevet DE-A-1 430 902, on connait une matelassure de siège de véhicule automobile comprenant un bloc en mousse présentant, évidé dans sa face de portage ou d'appui, un évidement fermé par un fond vers la face opposée de la matelassure, ledit évidement étant garni d'un insert constitué en un matériau plus perméable à l'air et/ou à l'humidité que la mousse constitutive du bloc.

Grâce à l'insert perméable, une telle matelassure procure un bon confort hygrothermique, et bénéficie d'une bonne aération et de l'élimination de l'humidité par des ouvertures débouchantes ménagées dans le fond de l'évidement.

Par contre, une matelassure selon ce document allemand a pour inconvénients que son insert offre peu de confort au toucher, car le matériau perméable utilisé est un crin animal ou végétal, et surtout qu'elle ne permet pas de venir rappeler la coiffe entre l'insert et la mousse. Cette matelassure connue ne présente donc pas des formes et une structure adaptées au rappel du garnissage, comme cela se pratique sur des matelassures classiques, entièrement en mousse.

Sur ces dernières en effet, il est courant de ménager dans la mousse des gorges de rappel de garnissage, s'ouvrant dans la face de portage du bloc de mousse, et délimitant la partie centrale du coussin vis-à-vis des parties latérales, pour former des lignes rentrantes de la coiffe.

Ces lignes rentrantes sont nécessaires pour, à la fois, conférer une forme générale concave à la face de portage du coussin et tendre correctement la coiffe qui recouvre cette face, cette coiffe étant tendue le long des lignes rentrantes vers l'intérieur du coussin. La tension de la coiffe vers l'intérieur de la matelassure est assurée par des moyens connus tels que, par exemple, des attaches solidaires de la coiffe venant s'accrocher sur des fils ou tringles noyés dans le fond des gorges de rappel.

Par ailleurs, le document FR-A-2 303 503 présente une matelassure formée de plusieurs couches superposées et intégrant une armature en feuillards ne permettant pas de rappeler la coiffe. De même, dans le document FR-A-2 609 703, même si la matelassure en mousse présente, sur sa face de portage, des gorges en creux s'étendant longitudinalement dans la matelassure et espacées l'une de l'autre, ces gorges sont destinées à recevoir des lisières de raccordement de deux parties latérales à une partie centrale d'une coiffe et non à former des lignes rentrantes de cette coiffe.

L'invention a pour but principal de proposer une matelassure munie d'un insert procurant un bon confort hygrothermique et un bon contact au toucher tout en assurant des rappels de garnissage d'une qualité au moins égale à celle des rappels de garnissage d'une matelassure entièrement en mousse de polyuréthane.

A cet effet, la matelassure de siège selon l'invention, du type connu par DE-A-1 430 902 et tel que présenté ci-dessus, se caractérise en ce que, la face de portage comprenant au moins deux gorges de rappel de garnissage propres à définir deux lignes rentrantes dans la coiffe enveloppant la matelassure, lignes symétriques ou sensiblement symétriques l'une de l'autre par rapport à un plan vertical longitudinal médian de la matelassure, l'évidement est disposé entre ces deux gorges et séparé de celles-ci par respectivement deux rebords étroits constitués en une mousse dure.

Dans ces conditions, la dureté de la mousse des rebords adjacents aux gorges de rappel permet de donner à ces rebords en mousse une rigidité suffisante pour faciliter la pose du garnissage et, malgré la présence d'un ou de plusieurs inserts perméables, procurer des formes d'excellente qualité au niveau des rappels de la coiffe en lignes rentrantes le long de ces gorges de rappel.

Dans des modes de réalisation préférés, on a recours en outre à l'une et/ou à l'autre des dispositions suivantes:
- un troisième rebord relie transversalement les deux rebords de façon à former avec eux un cadre ouvert en U, et une troisième gorge de rappel est adjacente au cadre, à l'extérieur de ce dernier, le long du troisième rebord également en mousse dure,
- les deux rebords appartiennent à un même cadre fermé, qui est adjacent à une autre gorge de rappel, externe au cadre, et le long d'au moins une autre partie de cadre, qui est également en mousse dure,
- la matelassure comprend plusieurs évidements transversaux garnis d'inserts et s'étendant chacun entre les deux gorges de rappel,
- au moins un insert et/ou, comme connu en soi par DE-A-1 430 902, le fond de l'évidement correspondant présente une épaisseur variable dans au moins une direction transversale ou longitudinale de la matelassure,
- au moins un insert présente au moins localement une surépaisseur du matériau perméable, qui fait saillie sur la face de portage de la matelassure par rapport aux rebords ci-dessus, avant garnissage de la matelassure avec une coiffe,
- le fond d'au moins un évidement présente au moins une ouverture borgne, s'ouvrant vers la face de contact ou vers la face opposée de la matelassure, et/ou, comme connu en soi par DE-A-1 430 902, au moins une ouverture débouchant dans ces deux faces,
- le fond d'au moins un évidement et/ou deux parties latérales du bloc de mousse séparées des deux rebords par les deux gorges de rappel sont en une mousse sensiblement aussi dure que celle des rebords, ce qui facilite la réalisation du support en mousse d'au moins un insert et/ou améliore encore la qualité des formes au niveau des rappels, ainsi que le bon maintien par les parties latérales,
- le matériau perméable constitutif d'au moins un insert comprend des fibres animales ou végétales, comme connu par DE-A-1 430 902, mais ces fibres sont liées entre elles par un liant caoutchouteux synthétique ou naturel, ce qui améliore le confort au toucher et la souplesse de la partie de matelassure garnie de l'insert,
- en variante, le matériau perméable constitutif d'au moins un insert comprend des fibres synthétiques, telles que de polyester, formant une ouate ou liées entre elles soit par une enduction de polyuréthane, soit par fusion d'une catégorie de fibres constituant la ouate, ou encore des boules de matière synthétique, par exemple de polyester, liées entre elles par thermoformage,
- au moins un insert est préfabriqué, par exemple par thermoformage, et rapporté et solidarisé dans l'évidement correspondant ménagé dans un bloc de mousse moulé d'une seule pièce comportant les rebords,
- en variante, au moins un insert, le fond de l'évidement correspondant et les rebords correspondants constituent un médaillon rapporté dans le bloc de mousse et solidarisé avec ce bloc,
- en variante encore, au moins un insert est surmoulé dans l'évidement correspondant d'un bloc de mousse à densité variable moulé d'une seule pièce.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant aux dessins ci-annexés d'une manière bien entendu non limitative. Sur ces dessins :
- la figure 1 est une vue de face schématique d'une matelassure pour coussin de dossier avec un insert de matériau perméable monté en médaillon dans un cadre non rapporté à trois côtés,
- les figures 2 et 3 sont des vues en coupe respectivement longitudinale, selon II-II, et transversale, selon III-III de la figure 1,
- la figure 4 est une coupe analogue à la figure 2 d'une variante de forme de médaillon,
- les figures 5 et 6 sont des coupes analogues à la figure 3 montrant d'autres variantes de forme de médaillon,
- les figures 7 et 8 sont des vues analogues aux figures 1 et 2, (la figure 8 correspondant à une coupe selon VIII-VIII de la figure 7), montrant un cadre non rapporté, fermé à quatre côtés, et une variante de bloc de mousse avec des ouvertures borgnes et débouchantes dans le fond de l'évidement du médaillon,
- les figures 9 et 10 sont des vues analogues à la figure 7 de variantes de matelassure avec respectivement deux et trois médaillons à cadre fermé ou en U ou H, de différentes formes, dimensions, et positions,
- la figure 11 est une vue en perspective et en coupe d'un médaillon préfabriqué à trois ou quatre côtés, à rapporter et fixer sur un bloc de mousse d'une matelassure, et
- les figures 12 et 13 sont des coupes analogues à la figure 3 schématisant deux modes de fixation du médaillon préfabriqué de la figure 11 sur le bloc de mousse des autres parties de la matelassure.

Sur les figures, les éléments analogues des différents exemples de matelassure sont repérés par les mêmes références numériques, éventuellement affectées d'une lettre d'indice en cas de pluralité de ces éléments analogues.

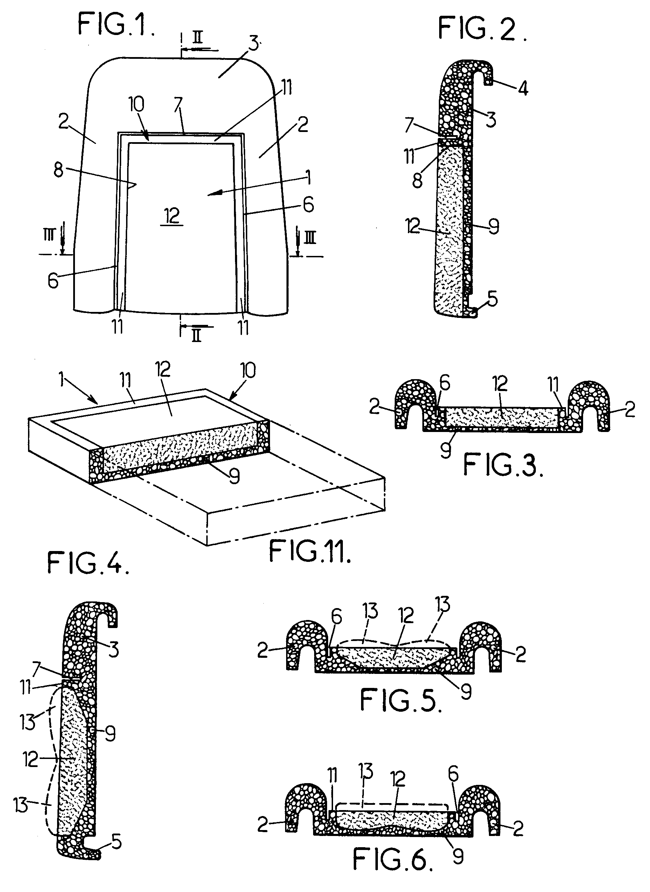

La matelassure des figures 1 à 3 comprend une partie centrale 1, destinée à être en contact avec le dos de l'utilisateur, et entourée de parties périphériques comprenant deux ailes ou parties latérales 2 et un haut de dossier 3, avec son retour de crosse 4. En partie basse, comme visible sur la figure 2, la partie centrale 1 est également bordée d'une bavette inférieure 5 s'étendant à l'arrière de la matelassure, entre les ailes 2.

La partie centrale 1 est délimitée vis-à-vis des ailes 2 et du haut de dossier 3 par respectivement deux gorges 6 latérales de rappel de garnissage et une gorge de rappel 7 transversale, qui raccorde les gorges 6 à leurs extrémités supérieures.

Les ailes 2, à section transversale en aile de mouette, sont, comme les deux gorges 6, symétriques ou sensiblement symétriques l'une de l'autre par rapport au plan vertical, longitudinal et médian de la matelassure, qui correspond au plan de coupe II-II.

Les gorges de rappel 6 et 7 dans la face de portage de la matelassure sont destinées à définir des lignes rentrantes dans une coiffe enveloppant la matelassure. Dans cet exemple, les gorges 6 et 7 sont sensiblement rectilignes, la gorge 7 étant sensiblement horizontale, et les gorges 6 sensiblement verticales ou légèrement inclinées l'une vers l'autre et vers le haut de dossier 3.

Dans le volume délimité entre les trois gorges 6 et 7, formant un U retourné dans cet exemple, la partie centrale 1 présente un évidement 8, ouvert vers la face d'appui du dossier contre le dos de l'utilisateur mais fermé vers la face opposée par un fond 9, et délimité par un cadre 10 ouvert, à trois côtés en forme de rebords 11 relativement étroits directement adjacents chacun à l'une respectivement des trois gorges 6 et 7.

Dans cet exemple, les ailes 2, le haut de dossier 3, la bavette 5, ainsi que le fond 9 et le cadre 10 sont constitués d'un unique bloc de mousse de polyuréthane, la dureté de la mousse de polyuréthane du fond 9 et du cadre 10 étant égale ou supérieure à celle de la mousse des autres parties.

L'évidement 8 loge un insert 12 d'un matériau offrant de meilleures caractéristiques de perméabilité à l'air et à l'humidité que la mousse du bloc.

Cet insert perméable 12, en contact avec le dos de l'utilisateur par le seul intermédiaire de la partie de coiffe recouvrant cette face d'appui de la partie centrale 1 de la matelassure, procure un bon confort hygrothermique à l'utilisateur, en réduisant sinon en supprimant la gêne d'une transpiration dorsale par contact et frottement contre le coussin du dossier.

Afin d'ajuster à volonté l'un et/ou l'autre, voire la totalité, des trois paramètres que sont la perméabilité de la matelassure, la souplesse au toucher, et la dureté de la partie centrale 1, ainsi que le poids et l'épaisseur de la matelassure, il est possible d'ajuster le rapport entre les épaisseurs du matériau perméable de l'insert 12 et de la mousse du fond 9, d'une part, dans le sens longitudinal, comme représenté sur la figure 4, et, d'autre part, dans le sens transversal, comme représenté sur les figures 5 et 6. De plus, l'épaisseur de la partie centrale 1, c'est-à-dire la somme des épaisseurs de l'insert 12 et du fond 9, peut être variable dans l'une et/ou l'autre des deux directions longitudinale et transversale. Il est clair que l'une et/ou l'autre des deux couches de la partie centrale 1 que constituent l'insert 12 et le fond 9 peut avoir une épaisseur constante ou variable dans les deux directions précitées.

Sur la figure 4, l'épaisseur du fond 9 est constante dans la partie centrale de ce fond et augmente progressivement dans ses parties supérieure et inférieure, dans lesquelles l'épaisseur de l'insert 12 diminue d'autant. La coupe de la figure 5 montre que l'épaisseur du fond augmente également progressivement dans ses parties latérales, où l'épaisseur de l'insert 12 diminue de manière correspondante. La variante de la figure 6 montre que le fond 9 de l'évidement peut être ondulé et présenter deux cuvettes latérales séparées par un renflement central.

Sur les figures 4 à 6, on a représenté en traits interrompus des surépaisseurs 13 de matériau perméable, pouvant être prévues localement en saillie sur la face de portage du bloc de mousse par rapport aux rebords 11 du cadre 10, avant la pose de la coiffe, et dont la compression est assurée lors du garnissage de la matelassure avec la coiffe, de manière à ramener la face d'appui de l'insert 12 sensiblement dans le plan des faces supérieures des rebords 11 du cadre. Cette compression d'au moins une surépaisseur localisée de matériau perméable permet d'ajuster la dureté de l'insert 12 et sa forme tant au centre qu'aux bords.

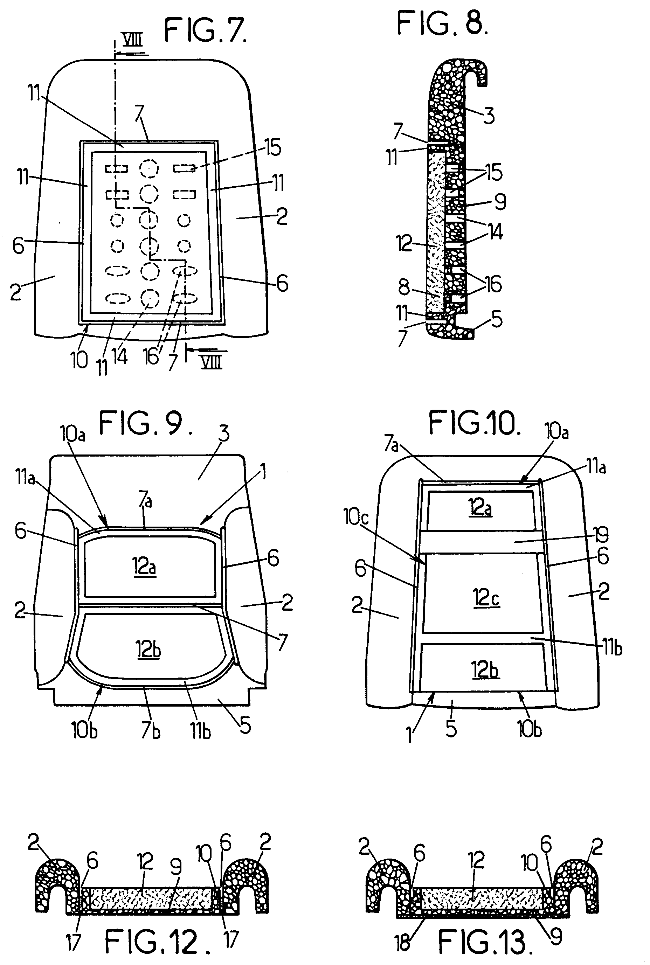

Pour améliorer et ajuster à volonté la perméabilité de la partie centrale 1 et ajuster à volonté la souplesse ou rigidité de cette partie, des ouvertures peuvent être ménagées dans le fond 9 de l'évidement, comme représenté sur les figures 7 et 8, où le cadre 10 comporte quatre côtés 11, et deux gorges transversales 7 en plus des deux gorges verticales 6. Ces ouvertures peuvent comprendre des ouvertures 14 débouchant sur les deux faces du fond 9, ou des ouvertures borgnes s'ouvrant, telles que 15, dans l'évidement 8 vers l'insert 12, ou, telles que 16, dans la face opposée ou arrière du fond 9. La section transversale de ces ouvertures peut être par exemple circulaire, rectangulaire ou ovale, comme représenté respectivement pour les ouvertures 14, 15 et 16. D'autres formes sont possibles et le nombre des ouvertures n'est pas limité. Leur taille, également variable, permet aussi de faire varier la rigidité. Les ouvertures débouchantes 14 permettent un bon passage de l'air à travers la matelassure. Les ouvertures peuvent être réparties de différentes manières dans le fond 9, par exemple agencées en ouvertures centrées sur des lignes verticales ou horizontales et parallèles, ou encore en quinconce.

Différentes formes peuvent être données à la partie centrale 1 et en particulier à sa surface couverte par un ou plusieurs inserts perméables. La forme géométrique de la partie centrale 1 peut être quelconque, par exemple une forme polygonale, à sommets éventuellement arrondis, et éventuellement avec un ou plusieurs côtés arrondis, de forme convexe ou concave. Le contour de la zone centrale 1 peut également être arrondi ou une combinaison des formes précitées. Le matériau perméable peut couvrir toute la partie centrale ou seulement une portion de celle-ci. Ses formes, dimensions et positions sur la partie centrale sont librement choisies, en particulier la largeur et la hauteur du médaillon constitué par l'insert 12 dans son cadre 10, ainsi que la distance séparant éventuellement la partie basse de ce cadre du bord inférieur de la bavette, correspondant au bord inférieur du dossier.

Sur les figures 9 et 10 sont représentées des matelassures dont la partie centrale comprend respectivement deux et trois évidements transversaux garnis d'inserts entourés chacun d'un cadre fermé ou ouvert en U ou en H, et s'étendant chacun entre les deux gorges latérales de rappel.

Sur la figure 9, les deux gorges latérales 6 sont parallèles et verticales dans leur partie supérieure et s'écartent l'une de l'autre et vers la bavette 5 dans leur partie inférieure, en suivant ainsi le contour interne des ailes 2. Entre ces gorges 6, la partie centrale 1 comprend deux médaillons qui ne sont séparés l'un de l'autre que par une gorge de rappel transversale 7, et chacun constitué d'un insert perméable 12a ou 12b logé dans l'un respectivement de deux évidements transversaux, et entouré de l'un respectivement de deux cadres fermés 10a et 10b, dont les rebords latéraux sont directement adjacents respectivement aux parties supérieures et inférieures des gorges 6. Le cadre supérieur 10a a une forme sensiblement rectangulaire avec son rebord supérieur 11a arrondi dans ses parties latérales de jonction aux rebords latéraux rectilignes, tandis que son rebord inférieur également rectiligne est séparé par la gorge 7 du rebord supérieur rectiligne du cadre inférieur 10b. Ce dernier a une forme sensiblement trapézoïdale, avec un rebord inférieur 11b, correspondant à sa grande base, qui est arrondi et convexe.

Le rebord supérieur 11a et le rebord inférieur 11b sont adjacents respectivement à une gorge de rappel transversale supérieure 7a et inférieure 7b externe au cadre 10a ou 10b correspondant et reliant les extrémités respectivement supérieures et inférieures des gorges latérales 6. Dans ce cas, les rebords 11a et 11b sont en une mousse dure, comme les autres côtés des cadres fermés 10a et 10b.

Sur la figure 10, la partie centrale 1 comprend trois médaillons transversaux non adjacents, de forme rectangulaire, s'étendant entre les deux gorges latérales rectilignes 6, et formés des cadres supérieur 10a, inférieur 10b et central 10c entourant des inserts respectivement 12a, 12b et 12c, pouvant être constitués de matériaux perméables différents, et logés dans des évidements de formes, dimensions et positions correspondantes ménagés dans le bloc de mousse. Les trois cadres ont sensiblement la même largeur, le cadre inférieur 10b et le cadre central 10c ayant un côté transversal commun 11b et représentent à eux deux un cadre en H. Le côté transversal supérieur 11a du cadre 10a est adjacent à une gorge de rappel transversale 7a. L'insert supérieur 12a et l'insert central 12c sont séparés par une bande transversale de mousse 19 faisant partie du bloc de mousse. Le cadre supérieur 10a est ainsi un cadre en U retourné.

De manière générale, le nombre d'inserts perméables dans la partie centrale est déterminé en fonction de la localisation désirée des parties perméables et du nombre et des emplacements des gorges de rappel.

De plus, chaque évidement est délimité, sur au moins une portion de son périmètre, par un cadre dont au moins chaque rebord ou partie séparée d'au moins une partie périphérique du bloc de mousse par au moins une gorge de rappel de garnissage est en une mousse dure.

Comme matériau perméable, pour les inserts 12, on peut utiliser un enchevêtrement de fibres de crin, d'origine animale ou végétale, liées entre elles par une matière caoutchouteuse synthétique ou naturelle, telle que du polyuréthane ou du latex. De préférence, cependant on utilise un ensemble de fibres de polyester, de deniers identiques ou différents, suivant les caractéristiques de perméabilité et dureté voulues, et liées entre elles par une enduction de polyuréthane. Un matériau de ce type est connu sous la dénomination commerciale de "Néocurl".

Un autre matériau perméable utilisable est une ouate de fibres mixtes de polyester, dont une catégorie de fibres présente un point de fusion élevé et sert de structure à la ouate, tandis qu'une autre catégorie de fibres présente un point de fusion moins élevé et sert de liant aux fibres de structure.

De manière générale, le matériau perméable peut se présenter sous la forme de fibres de natures différentes entremêlées, par exemple de polyester ou copolyester, ou de deniers différents (gros et petit diamètres) ou encore de boules de polyester liées entre elles par thermoformage.

La matelassure peut être réalisée par la mise en oeuvre de l'un ou l'autre de trois types de procédés.

Selon un premier type, on moule, d'un côté, toutes les parties en mousse de la matelassure dans un même moule, par les techniques de moussage couramment utilisées pour fabriquer de la mousse à dureté et densité variables. D'un autre côté, on réalise l'insert à sa forme définitive par mise en forme du matériau perméable, puis on assemble l'insert dans l'évidement correspondant sur la partie centrale du bloc de mousse de la matelassure. Le matériau perméable constitutif de l'insert peut être soit préalablement découpé à sa taille définitive, soit porté à sa forme finale par thermoformage à l'air chaud, s'il est essentiellement en polyester par exemple.

Selon un second type de procédé, on met le matériau perméable en forme, par exemple par thermoformage, dans un moule, puis on le surmoule dans un support en mousse de polyuréthane dure constituant le fond 9 de l'évidement et le cadre 10, de façon à obtenir un médaillon tel que représenté sur la figure 11. Séparément, on moule les parties périphériques de la matelassure en un seul bloc de mousse. Ensuite, on rapporte le médaillon préfabriqué sur le bloc de mousse et on le lie à ce dernier par collage ou par tout autre moyen d'assemblage utilisé en garnissage, comme décrit ci-dessous en référence aux figures 12 et 13.

La figure 11 représente une partie centrale 1 agencée en un médaillon stratifié à deux couches, dont la couche inférieure est le fond 9 en mousse de l'évidement 8 logeant la couche supérieure, constituée de l'insert 12 de matériau perméable, entouré du cadre 10 à trois ou quatre côtés 11.

L'insert 12 est ainsi monté en médaillon dans un support d'une seule pièce en mousse de polyuréthane et constitué du fond 9 et du cadre 10.

Ce médaillon peut être préfabriqué puis rapporté et solidarisé dans un bloc de mousse de polyuréthane formant les autres parties en mousse de la matelassure, comme décrit plus en détail ci-dessous en référence aux figures 12 et 13.

Comme représenté sur la figure 12, le médaillon constitué de l'insert 12, du fond 9 et du cadre 10 peut être collé entre les ailes 2 du bloc de mousse par leurs parties en contact, c'est-à-dire la partie périphérique du cadre 10 qui est adjacente au fond 9, contre la partie en regard des ailes 2, par les collages 17, de façon à laisser subsister les gorges de rappel 6 entre le cadre 10 et les ailes 2 au-dessus des collages 17.

En variante, comme représenté sur la figure 13, un morceau d'étoffe 18, par exemple un non-tissé, couvrant tout ou partie de la face arrière de la matelassure, peut être surmoulé sous le fond 9 du médaillon et collé sous les ailes 2, ou surmoulé sous les ailes 2 et collé sous le fond 9 du médaillon, à l'assemblage.

L'insert 12 peut être aussi assemblé dans son logement sur son support 9-10 par collage, ou tout autre moyen d'assemblage connu et utilisé dans le domaine du garnissage de sièges, par exemple à l'aide de pièces de rappel ou de pattes avec des micro-crochets coopérant avec des pattes à micro-bouclettes.

Dans ces deux types de procédé, l'insert 12 perméable peut être collé simultanément sur la coiffe, lors de l'opération de thermoformage, ce qui économise une opération d'assemblage. Ce collage est obtenu soit par fusion de fibres liantes du matériau perméable, soit par enduction du matériau perméable ou de la coiffe avec un liant thermofusible par exemple sous forme de poudre.

Le troisième type de procédé comporte deux variantes. Selon une première possibilité, l'insert 12 de matériau perméable est préparé, comme mentionné ci-dessus, par exemple par thermoformage, avec ou sans coiffe. On dispose ensuite cet insert dans un moule de coulée de la matelassure, où il sera surmoulé lors du moussage du bloc de mousse à densité variable constituant toutes les parties en mousse de la matelassure.

Selon une seconde possibilité, toutes les parties en mousse sont d'abord moulées dans un même moule, pour obtenir un bloc de mousse de densité variable, puis on place ce bloc dans un moule de thermoformage du matériau perméable, et on thermoforme directement ce matériau dans la mousse pour former l'insert dans son logement, en y ajoutant ou non la coiffe.

## Revendications

1. Matelassure de siège, comprenant un bloc en mousse présentant, évidé dans sa face de portage, un évidement (8) fermé par un fond (9) vers la face opposée de la matelassure, ledit évidement (8) étant garni d'un insert (12) constitué en un matériau plus perméable à l'air et/ou à l'humidité que la mousse constitutive du bloc, caractérisée en ce que, la face de portage comprenant au moins deux gorges (6) de rappel de garnissage propres à définir deux lignes rentrantes dans la coiffe enveloppant la matelassure, lignes symétriques ou sensiblement symétriques l'une de l'autre par rapport à un plan vertical longitudinal médian de la matelassure, l'évidement (8) est disposé entre ces deux gorges (6) et séparé de celles-ci par respectivement deux rebords étroits (11) constitués en une mousse dure.

2. Matelassure selon la revendication 1, caractérisée en ce qu'elle comprend un troisième rebord (11), reliant transversalement les deux rebords (11) de façon à former avec eux un cadre (10) ouvert en U, et une troisième gorge de rappel (7) adjacente au cadre (10) à l'extérieur de ce dernier et le long du troisième rebord (11) également en mousse dure.

3. Matelassure selon la revendication 1, caractérisée en ce que les deux rebords appartiennent à un même cadre fermé (10a, 10b), qui est adjacent à une autre gorge de rappel (7a, 7b) externe au cadre et le long d'au moins une partie (11a, 11b) de cadre qui est également en mousse dure.

4. Matelassure selon l'une quelconque des précédentes revendications, caractérisée en ce qu'elle comprend plusieurs évidements transversaux garnis d'inserts (12a, 12b, 12c), et s'étendant chacun entre les deux gorges de rappel (6).

5. Matelassure selon l'une quelconque des précédentes revendications, caractérisée en ce que l'insert (12) et/ou le fond (9) de l'évidement (8) correspondant présente/nt une épaisseur variable dans au moins une direction transversale ou longitudinale de la matelassure.

6. Matelassure selon l'une quelconque des précédentes revendications, caractérisée en ce que l'insert (12) présente au moins localement une surépaisseur (13) du matériau perméable qui fait saillie sur la face de portage de la matelassure par rapport aux rebords (11) ci-dessus, avant garnissage de la matelassure avec une coiffe.

7. Matelassure selon l'une quelconque des précédentes revendications, caractérisée en ce que le fond (9) de l'évidement (8) présente au moins une ouverture borgne (15, 16), s'ouvrant vers la face de portage ou la face opposée de la matelassure, et/ou au moins une ouverture (14) débouchant dans ces deux faces.

8. Matelassure selon l'une quelconque des précédentes revendications, caractérisée en ce que les parties latérales (2) du bloc de mousse qui sont séparées des deux rebords (11) par les deux gorges (6) de rappel et/ou le fond (9) de l'évidement (8) sont en une mousse sensiblement aussi dure que celle des rebords (11).

9. Matelassure selon l'une quelconque des précédentes revendications, caractérisée en ce que l'insert (12) préfabriqué, par exemple par thermoformage, est rapporté et solidarisé dans l'évidement (8) correspondant ménagé dans un bloc de mousse moulé d'une seule pièce comportant les rebords.

10. Matelassure selon l'une quelconque des revendications 1 à 8, caractérisée en ce que l'insert (12), le fond (9) en mousse de l'évidement (8) correspondant et les rebords (11) en mousse correspondants constituent un médaillon rapporté dans le bloc de mousse et solidarisé avec ce bloc.

## Claims

1. Seat padding, comprising a foam block having, recessed in its support face, a recess (8) closed by a base (9) towards the opposite face of the padding, the said recess (8) being filled with an insert (12) consisting of a material which is more permeable to air and/or to moisture than the foam constituting the block, characterized in that, with the support face comprising at least two lining return grooves (6) capable of defining two re-entrant lines in the cover surrounding the padding, which lines are symmetrical or substantially symmetrical to each other with respect to a longitudinal vertical mid-plane of the padding, the recess (8) is arranged between these two grooves (6) and separated from them by two respective narrow shoulders (11) made of a hard foam.

2. Padding according to Claim 1, characterized in that it comprises a third shoulder (11), transversely joining the two shoulders (11) so as to form with them an open U-shaped frame (10), and a third return groove (7), adjacent to the frame (10) outside the latter and along the third shoulder (11) which is also made of hard foam.

3. Padding according to Claim 1, characterized in that the two shoulders belong to one and the same closed frame (10a, 10b) which is adjacent to another return groove (7a, 7b) outside the frame and along at least a part (11a, 11b) of the frame which is also made of hard foam.

4. Padding according to any one of the preceding claims, characterized in that it comprises several transverse recesses filled with inserts (12a, 12b, 12c) and each extending between the two return grooves (6).

5. Padding according to any one of the preceding claims, characterized in that the insert (12) and/or the base (9) of the corresponding recess (8) has or have a variable thickness in at least one transverse or longitudinal direction of the padding.

6. Padding according to any one of the preceding claims, characterized in that the insert (12) has, at least locally, an overthickness (13) of the permeable material which projects over the support face of the padding with respect to the above shoulders (11), before lining the padding with a cover.

7. Padding according to any one of the preceding claims, characterized in that the base (9) of the recess (8) has at least one blind opening (15, 16) opening towards the support face or the opposite face of the padding, and/or at least one opening (14) emerging in these two faces.

8. Padding according to any one of the preceding claims, characterized in that the side parts (2) of the block of foam which are separated from the two shoulders (11) by the two return grooves (6) and/or the base (9) of the recess (8) are made of a foam at least substantially as hard as that of the shoulders (11).

9. Padding according to any one of the preceding claims, characterized in that the insert (12), prefabricated, for example by thermoforming, is added on and fastened in the corresponding recess (8) made in a block of foam moulded in a single piece, including the shoulders.

10. Padding according to any one of claims 1 to 8, characterized in that the insert (12), the foam base (9) of the corresponding recess (8) and the corresponding foam shoulders (11) constitute a panel added on in the block of foam and fastened to this block.

## Patentansprüche

1. Sitzpolster, das einen auf seiner Tragseite ausgehöhlten Schaumblock umfaßt, der eine Aussparung (8) aufweist, die zu der Seite hin, die dem Polster gegenüber angeordnet ist, von einem Boden (9) verschlossen ist, welche Aussparung (8) mit einer Einlage (12) versehen ist, die aus einem Material besteht, das für Luft und/oder Feuchtigkeit durchlässiger ist als der Schaum, aus dem der Block besteht, dadurch gekennzeichnet, daß die Aussparung (8), nachdem die Tragseite mindestens zwei Rillen (6) zum Einzug des Bezugs aufweist, die geeignet sind, zwei einspringende Linien in dem Überzug, der die Polsterung einhüllt, zu bilden, und zwar bezüglich einer vertikalen Mittellängsebene des Polsters zueinander symmetrische oder im wesentlichen symmetrische Linien, zwischen diesen beiden Rillen (6) angeordnet und von diesen durch jeweils zwei schmale Leisten (11) aus einem Hartschaum getrennt ist.

2. Polster nach Anspruch 1, dadurch gekennzeichnet, daß es eine dritte Leiste (11) umfaßt, welche die beiden Leisten (11) transversal miteinander verbindet, so daß sie mit ihnen einen U-förmig offenen Rahmen (10) bildet, sowie eine dritte Einzugsrille (7), die an den Rahmen (10) angrenzend außerhalb desselben und entlang der dritten Leiste (11) aus ebenfalls Hartschaum angeordnet ist.

3. Polster nach Anspruch 1, dadurch gekennzeichnet, daß die beiden Leisten zu ein und demselben geschlossenen Rahmen (10a, 10b) gehören, der an eine weitere Einzugsrille (7a, 7b) angrenzt, die außerhalb des Rahmens und entlang mindestens eines Rahmenteils (11a, 11b) angeordnet ist, der ebenfalls aus Hartschaum ist.

4. Polster nach einem der vorstehenden Ansprüche, dadurch gekennzeichnet, daß es mehrere transversale Aussparungen aufweist, die mit Einlagen (12a, 12b, 12c) versehen sind und sich jeweils zwischen den beiden Einzugsrillen (6) erstrecken.

5. Polster nach einem der vorstehenden Ansprüche, dadurch gekennzeichnet, daß die Einlage (12) und/oder der entsprechende Boden (9) der Aussparung (8) eine zumindest in einer Quer- oder Längsrichtung des Polsters variable Dicke aufweist/aufweisen.

6. Polster nach einem der vorstehenden Ansprüche, dadurch gekennzeichnet, daß die Einlage (12) zumindest stellenweise eine Verdickung (13) des durchlässigen Materials aufweist, die vor dem Beziehen des Polsters mit einem Bezug auf der Tragseite des Polsters gegenüber den oben genannten Leisten (11) heraussteht.

7. Polster nach einem der vorstehenden Ansprüche, dadurch gekennzeichnet, daß der Boden (9) der Aussparung (8) mindestens eine Blindöffnung (15, 16) aufweist, die sich zu der Trag- oder der entgegengesetzten Seite des Polsters hin öffnet, und/oder mindestens eine Öffnung (14), die in diese beiden Seiten mündet.

8. Polster nach einem der vorstehenden Ansprüche, dadurch gekennzeichnet, daß die seitlichen Bereiche (2) des Schaumblocks, die von den beiden Leisten (11) durch die beiden Einzugsrillen (6) getrennt sind, und/oder der Boden (9) der Aussparung (8) aus einem Schaum bestehen, der im wesentlichen so hart wie der der Leisten (11) ist.

9. Polster nach einem der vorstehenden Ansprüche, dadurch gekennzeichnet, daß die Einlage (12), die vorgefertigt ist, und zwar beispielsweise durch Thermoformung, in die entsprechende Aussparung (8) eingesetzt und fest mit ihr verbunden wird, die in einem aus einem Stück geformten Schaumblock vorgesehen ist, der die Leisten umfaßt.

10. Polster nach einem der Ansprüche 1 bis 8, dadurch gekennzeichnet, daß die Einlage (12), der Boden (9) aus Schaum der entsprechenden Aussparung (8) und die entsprechenden Leisten (11) aus Schaum ein medaillonförmiges Teil bilden, das in den Schaumblock eingesetzt und mit diesem fest verbunden wird.
